# EUROPÄISCHE PATENTANMELDUNG

(11) **EP 0 909 529 A1**
(43) Veröffentlichungstag der Anmeldung: **21.04.1999**
(21) Anmeldenummer: 97119188.7
(22) Anmeldetag: 03.11.1997
(51) Int. Cl.: A01K 1/03

(54) **Tierkäfig**

(30) Priorität: 16.10.1997 DE 19745633
(71) Anmelder: E. Becker & Co. GmbH, D-44579 Castrop-Rauxel (DE)
(72) Erfinder: Untiedt, Hubert, 48308 Senden (DE); Rösen, Dieter, 44869 Bochum (DE); Fröse, Eckhardt, Dipl.-Ing., 38100 Braunschweig (DE)
(74) Vertreter: Herrmann-Trentepohl, Werner, Dipl.-Ing.

(57) **Zusammenfassung**

Bei einem Tierkäfig (1) bestehend aus einer Wanne (2) zur Aufnahme eines oder mehrerer Kleintiere, einem Deckel (3), welcher die Wanne (2) nach oben verschließt und von dieser abgehoben werden kann, ist erfindungsgemäß vorgesehen, daß der Deckel (3) auf der Wanne (2) abgestützt und in einer Dimension (b) der von dem Wannenrand umschlossenen Öffnungsfläche (5) der Wanne (2) und in deren Ebene zwangsgeführt ist, jedoch quer zur Führungsrichtung einseitig aufklappbar ist.

## Beschreibung

Die Erfindung betrifft einen Tierkäfig gemäß dem Oberbegriff des Anspruches 1.

Die Erfindung bezieht sich insbesondere auf die Käfighaltung von Versuchstieren mit entsprechend hohen Anforderungen u. a. an die Keimfreiheit, die häufig nicht in den für die Käfighaltung vorgesehenen Räumen, aber deswegen in den Käfigen selbst gewährleistet sein muß. Diesen Anforderungen wird die Erfindung durch eine abnehmbare Filterhaube gerecht, welche einerseits den Käfig gegen nachteilige Einflüsse von außen schützt, aber andererseits für eine hinreichende Belüftung des Käfiginneren sorgt. Diese Filterhaube muß abnehmbar sein, wenn ein Zugang zu dem Deckel des Käfigs geschaffen werden soll.

Im allgemeinen wird man die Wanne des Käfigs aus einem transparenten Kunststoff z. B. Polycarbonat fertigen, um einerseits eine jederzeitige Begutachtung des Versuchstieres zu gewährleisten, aber andererseits einer ausreichenden Hygiene der Käfighaltung Rechnung zu tragen. Für die Filterhaube ergeben sich ähnliche Gesichtspunkte wie für den Werkstoff des Käfigs, so daß auch sie aus dem genannten oder einem anderen Kunststoff Transparent gefertigt werden sollte. Die Sicherheit eines solchen Tierkäfigs gegen ungewollten Luftaustausch zwischen dem Inneren des Käfigs und der Umgebungsluft hängt dann von der Festlegung der Filterhaube auf dem Käfig ab.

Solche Tierkäfige benötigen jedoch außerdem einen Deckel als oberen Abschluß der Wanne. Dieser Deckel weist je nach Art des im Käfig gehaltenen Tieres eine besondere Form auf, die beispielsweise eine Vorrichtung zur Bereithaltung von Futter und eine Tränke umfaßt, die z. B. in Form einer Tränkflasche auf dem Deckel befestigt werden kann. Solche Deckel müssen sich nach Entfernen der Filterhaube öffnen lassen, um Versuchstiere zu entnehmen oder in den Käfig einzusetzen. Die Erfindung richtet sich darauf, die Handhabung des Tierkäfigs zu optimieren.

Bekannte Tierkäfige dieser Art verwenden Deckel aus Drahtmatten mit einem umlaufenden und in sich geschlossenen Aussteifungsdraht, der bei geschlossenem Deckel einen allseitigen Formschluß mit der Innenseite des Wannenrandes eingeht. Zum Öffnen des Deckels muß dieser von der Wanne abgehoben werden. Dann besteht die Gefahr, daß der Deckel in die Wanne abrutscht. Das führt im Ergebnis zu erheblichen Schwierigkeiten beim Handling derartiger Tierkäfige.

Die Erfindung geht einen anderen Weg, dessen Grundgedanke im Anspruch 1 wiedergegeben ist. Weitere Erfindungsmerkmale sind Gegenstand der Unteransprüche.

Gemäß der Erfindung verhindert die Zwangsführung des Deckels in der Öffnungsebene der Wanne, daß der Deckel in die Wanne abkippt. Dadurch läßt sich der Deckel mit einer Hand gefahrlos verschieben. Andererseits ist die Führung senkrecht zur Öffnungsebene der Wanne nach unten offen. Dadurch kann der Deckel nach Aufhebung seines Formschlusses mit der Wanne quer zur Verschieberichtung einseitig angehoben werden, ohne daß seine seitliche Führung ganz verloren geht. Deshalb kann eine Person mit einer Hand den Deckel zurückschieben und mit der anderen Hand das Versuchstier aus der Wanne entnehmen. Auf die gleiche Weise kann in umgekehrter Reihenfolge ein Versuchstier in den zunächst geschlossenen Käfig eingesetzt werden. Diese Handhabung ist ein erheblicher Vorteil, weil die Führung den Deckel daran hindert, in den Käfig oder daneben zu fallen. Da dies mit Sicherheit vermieden wird, kann der Deckel auch mit seinen oben erwähnten Einrichtungen, d. h. z. B. mit gefüllter Füttereinrichtung und Tränke auf die beschriebene Weise gehandhabt werden. Insgesamt ist dadurch das Handling des neuen Tierkäfigs erheblich verbessert.

Vorzugsweise und mit den Merkmalen des Anspruches 2 wird auf einfache Weise dem Deckel eine weitere Funktion zugewiesen, nämlich die einer Unterstützung der Filterhaube. Dazu wird eine Rahmenkonstruktion verwirklicht, für die die Führungsprofile benutzt werden. Die Vereinigung dieser Rahmenglieder mit den restlichen Gliedern des Rahmens erfolgt dabei so, daß der ganzen Rahmen mit allen Rahmengliedern die Filterhaubenunterstützung bilden kann. Hierdurch ist eine sichere Auflage der Filterhaube gewährleistet.

Tierkäfige der erfindungsgemäßen Art können mit Wannen verwirklicht werden, welche einen allgemeinen rechteckigen Grundriß und vom Wannenboden nach oben leicht divergierende aufgehende Wände aufweisen. Für solche Käfige eignen sich die Merkmale des Anspruches 3 in besonderem Maße. Dabei ergibt sich ein Rahmengeviert, das der Käfigöffnung entspricht und eine Deckelführung, welche die Wannenränder als stationären Teil der Führung benutzt. Dabei ist es für die Handhabung des Deckels von Vorteil, daß Teile des Rahmens als Anschläge benutzt werden können, die in dieser Ausführungsform der Erfindung die völlig geschlossene Stellung des Deckels gewährleisten, sobald sie zur Anlage an den Deckelrand kommen. Die mit dem Tierkäfig arbeitende Person braucht keine zusätzliche Aufmerksamkeit beim Deckelschließen aufzubringen.

Für diese und ähnliche im wesentlichen durch die Merkmale des Anspruches 3 gekennzeichneten Ausführungsformen der Erfindung gewährleisten die Merkmale des Anspruches 4 einen Zwangslauf des Deckels in der oberen horizontalen Wannenöffnung, wobei jedoch der Deckel auch ganz abgenommen werden kann, um einen ungehinderten Zugang zur Wanne zu schaffen.

Den Deckel wird man in aller Regel aus einem anspruchsvollen Werkstoff fertigen, um einerseits dessen mechanische Festigkeit zu gewährleisten und andererseits den Anforderungen an die Hygiene der Käfighaltung Rechnung zu tragen, welche die Beeinträchtigungen des Deckelwerkstoffes auch bei Verwendung aggressiver Reinigungsmittel und unter ungünstigen äußeren Umständen möglichst ausschließen sollen. Hierfür empfiehlt sich u. a. Edelstahl, da dieser unter den genannten Umständen nicht korrodiert und eine erhebliche Festigkeit entwickelt. Verwirklicht man die Merkmale des Anspruches 5, so ergibt sich eine vereinfachte Herstellung des Deckels aus der Stanzbarkeit des Bleches und den geringen Aufwänden für die endgültige Fertigstellung des Rahmens. Ebenso läßt sich der Rahmen mit den Merkmalen des Anspruches 6 so dimensionieren, daß ein ausreichend breite umlaufende Unterstüzungsfläche für die aufgesetzte Filterhaube entsteht, jedoch die Deckelöffnung im wesentlichen von den Gitterstäben überdeckt wird. Auch lassen sich die die Verschiebebewegungen des Deckels begrenzenden Anschläge mit diesen Merkmalen auf einfache Weise verwirklichen, die aus dem Anspruch 7 hervorgehen.

Die Einzelheiten, weiteren Merkmale und andere Vorteile der Erfindung ergeben sich aus der nachfolgenden Beschreibung einer Ausführungsform der Erfindung anhand der Figuren in der Zeichnung; es zeigen
- Fig. 1: einen Tierkäfig gemäß der Erfindung in Seitenansicht und mit zurückgeschobenem Deckel,
- Fig. 2: den Gegenstand der Fig. 1 in Seitenansicht und mit geschlossenem Deckel,
- Fig. 3: eine Stirnansicht des Gegenstandes der Fig. 1 und 2 im Querschnitt,
- Fig. 4: die mit IV in Fig. 3 gekennzeichnete Einzelheit,
- Fig. 5: eine Stirnansicht des Deckels,
- Fig. 6: eine Draufsicht auf den Gegenstand der Fig. 5 und
- Fig. 7: den Gegenstand der Fig. 5 und 6 in Seitenansicht.

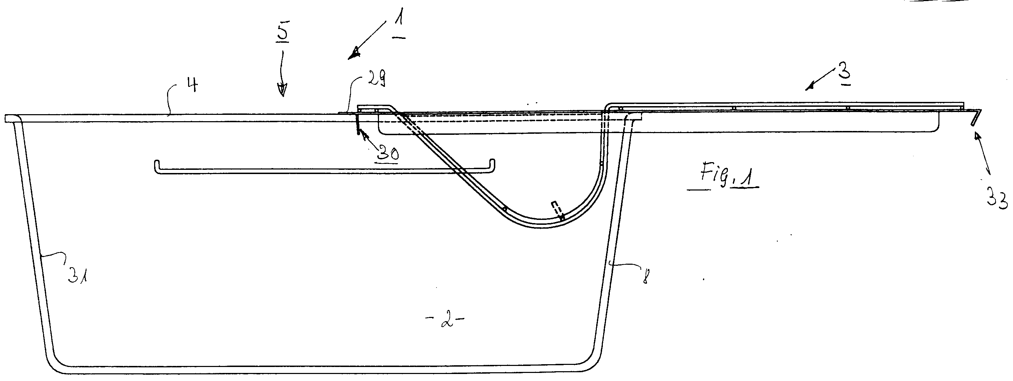

Der in Fig. 1 dargestellte Gegenstand ist ein Tierkäfig, in dem ein oder mehrere Versuchstiere im Inneren einer transparenten Wanne 2 gehalten werden. Der allgemein mit 1 bezeichnete Tierkäfig weist einen Deckel 3 auf, welcher die von einem Rand 4 umschlossene obere Öffnung 5 der Wanne 2 abdeckt. Der Tierkäfig 1 kann mit einer Filterhaube 6 nahezu vollständig abgedeckt werden, um die Öffnung 5 zu verschließen und einen unerwünschten Luftaustausch zwischen dem Inneren der Wanne 2 und der Umgebungsluft auszuschließen. Dazu dient ein Drahtkorb, der einen Filter unterstützt, welcher beispielsweise aus einem Filterpapier besteht.

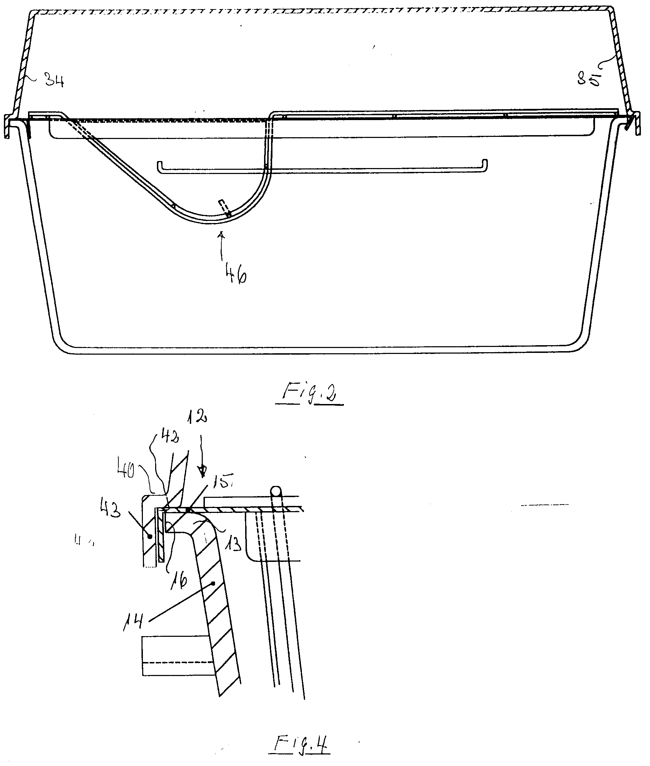

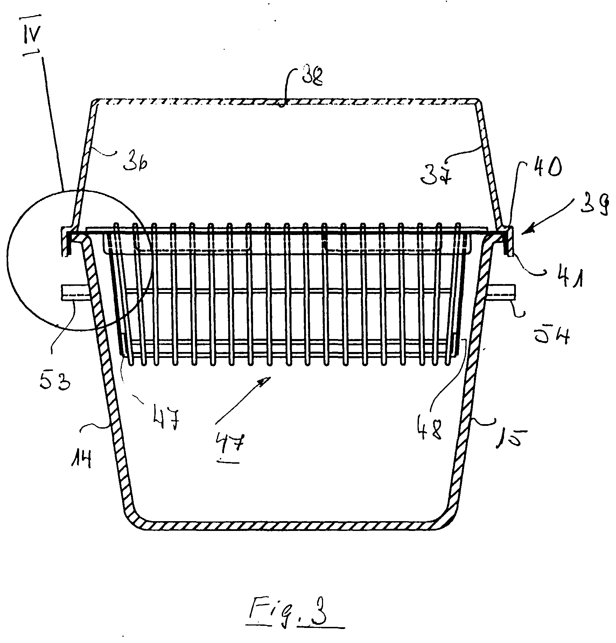

Wie sich aus einem Vergleich der Fig. 2 und 3 ergibt, haben der Tierkäfig 1, die Wanne 2, der Deckel 3 sowie die Filterhaube 6 einen im wesentlichen rechteckigen Grundriß, dessen längere Seite parallel zur Schnittebene der Fig. 2 verläuft, während die kürzeren Grundrißseiten parallel zur Schnittebene der Fig. 3 angeordnet sind. Der Deckel 3 ist gemäß Fig. 1 parallel zur längeren Dimension b in der Ebene der Öffnung 5 verschieblich geführt. Die Filterhaube 6 ist ihrerseits auf den Deckel 2 abgestützt.

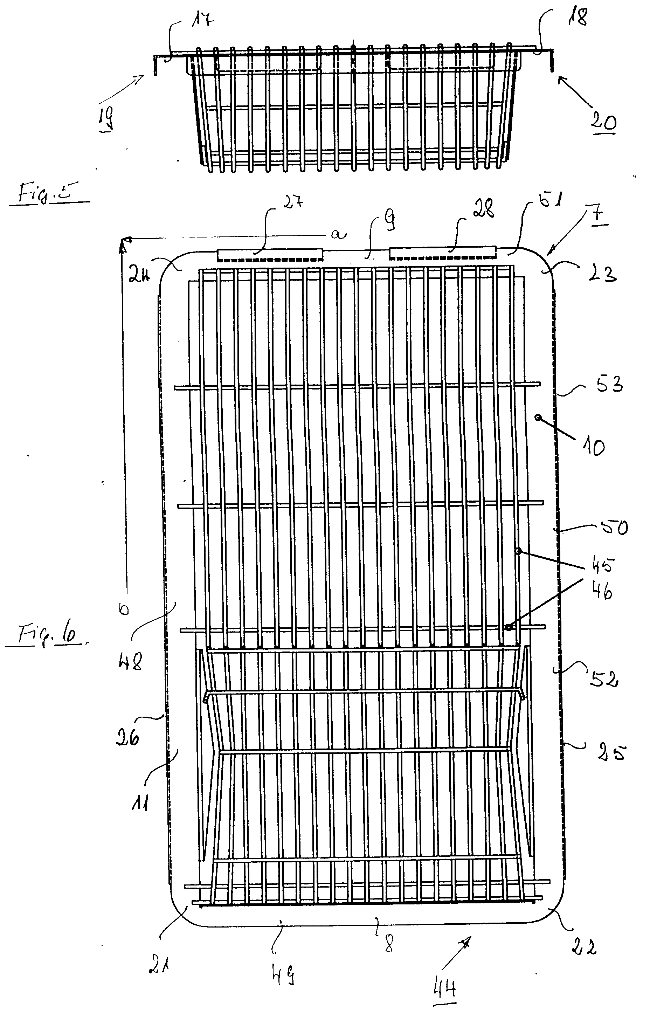

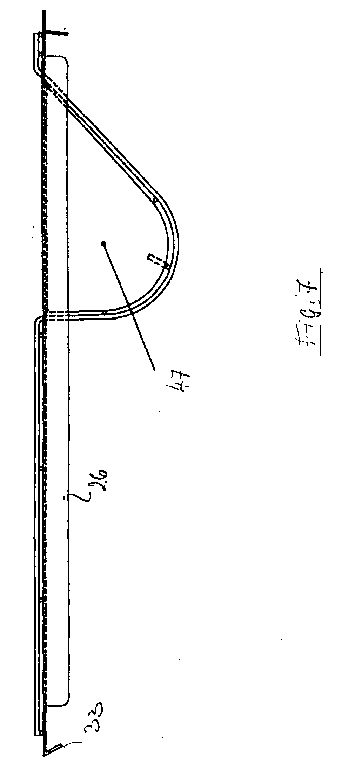

Dazu weist der Deckel einen umlaufenden horizontalen Rahmen 7 auf (Fig. 6). Dieser hat zwei Längsrahmenglieder z. B. 10, 11 und zwei Querrahmenglieder 8, 9, wobei die Rahmenglieder z. B. 8, 9 zueinander und zur Querdimension a des Wannengrundrisses parallel sind. Die Rahmenglieder 10, 11 sind ihrerseits zueinander und zur Längendimension b des Wannengrundrisses parallel. Diese letztgenannten Rahmenglieder 10, 11 bilden den beweglichen Teil einer Deckelführung, die am deutlichsten aus der Detaildarstellung der Fig. 4 hervorgeht. Die dort allgemein mit 12 bezeichnete Deckelführung hat einen stationären Teil, der von den horizontal nach außen gerichteten umlaufenden Flanschen 13 gebildet wird, die den Abschluß der aufgehenden Wannenränder bilden, von denen der Wannenrand in Fig. 4 mit 14 bezeichnet ist. Der gegenüberliegende Wannenrand ist identisch ausgeführt, wobei die aufgehende Wannenwand mit 15 bezeichnet ist (Fig. 3). Die Führung erfolgt dabei durch die Oberseite 15 des Flansches und durch dessen nach außen gerichtete senkrechte Kante 16.

Der bewegliche Teil der Führung besteht dagegen aus der Unterseite der den Wänden 14, 15 der Wanne zugeordneten und aus Profilen bestehenden Rahmengliedern 10, 11 wie bei 17 und 18 in Fig. 5 dargestellt. Diese Führung erzwingt einen Zwangslauf des Deckels in der längeren Dimension b mit Hilfe je eines nach unten offenen Winkelprofils 19, 20. Dieses Profil entsteht auf einer Länge zwischen den abgerundeten Rahmenecken 21-24 (Fig. 6) an beiden Seiten abgekanteten Blechstreifen 25, 26; diese Abkantungen bilden die nach unten gerichteten äußeren Winkelschenkel des Profils. Sie laufen bei Verschiebung des Deckels längs der in Fig. 4 mit 16 bezeichneten Kanten.

Im Ausführungsbeispiel bilden die Rahmenglieder 8-11 ein Rahmengeviert, dessen Führungsglieder 11, 26 bzw. 10, 25 mit den stationären Führungen zusammenwirken, wenn der Deckel verschoben wird. Aus Gründen der Vereinfachung des Deckelhandlings weist dieser Anschläge 27, 28 auf, welcher die Führungslänge begrenzt. Dabei handelt es sich um Winkelprofile mit einem horizontalen Schenkel 29, der sich auf die Oberseite des Deckelflansches 13 am Querglied 9 schiebt und einem senkrechten Schenkel 30, der mit der an den Deckelflansch 13 anschließenden Behälterwand 31 zum Formschluß kommt, sobald der Deckel vollständig geschlossen ist. In dieser Deckelposition ist der Deckel zusätzlich gegen unbeabsichtigtes Abheben vom Wannenrand mit einem weiteren Anschlag 33 gesperrt, welcher unter den Deckelflansch 13 an der gegenüberliegenden Querwand 8 greift und dadurch einen Formschluß mit der Wanne herbeiführt.

Der Rahmen 7 dient gleichzeitig zur Unterstützung der Filterhaube 6. Diese weist ihrerseits vier aufgehende Wände, nämlich Querwände 34, 35 und Längswände 36, 37 auf, welche eine Baueinheit mit dem Haubendeckel 38 bilden und den umlaufenden Winkelprofil 39 bilden, welches einen horizontalen Schenkel 40 und einen senkrecht nach unten weisenden Schenkel 41 aufweist. Wenn die Filterhaube vorschriftsmäßig die Wannenöffnung 5 abdeckt, ruht sie mit dem horizontalen Schenkel 50 auf dem äußeren Rand 42 des betreffenden Rahmengliedes und ist gegen Verschieben auf dem Deckel und der Wanne durch den Formschluß ihres nach unten weisenden Winkelschenkels 53 mit der Außenseite des Winkelschenkels 25, 26 der Führung bzw. den Rändern der Querrahmenglieder 8, 9 und der Anschläge 27, 28 gesichert.

Die winkelsteife Verbindung der Rahmenglieder in den Rahmenecken 21-24 wird gemaß dem Ausführungsbeispiel dadurch erreicht, daß der Rahmen 7 aus einem Blechausschnitt besteht, der in Fig. 6 allgemein mit 44 bezeichnet ist. Dadurch entsteht eine Baueinheit aus allen vier Rahmengliedern 8-11. Im Ausführungsbeispiel sind die als Führung des Zwangslaufes vorgesehenen Blechstreifen 25, 26 an die Außenkanten der Flansche 13 des Randes angeformt, d. h. sie sind so dimensioniert, daß sie nach dem Ausstanzen des Blechausschnittes abgekantet werden können.

Die Rahmenöffnung des Deckels wird geschlossen durch eine Drahtmatte, die in Fig. 3 allgemein mit 45 bezeichnet ist. Sie besteht ihrem grundsätzlichen Aufbau nach aus parallelen Längsstäben 45 und mit diesen vorzugsweise punktverschweißten Querstäben 46. Die Drahtmatte ist dabei so geformt, daß sie eine nach unten gerichtete trogförmige Raufe 46 bildet, welche pelletiertes Futtermaterial oder dergleichen aufnehmen kann. Aus dieser Einrichtung können die im Käfig gehaltenen Tiere das Material herausziehen. Zum Sauberhalten des Käfiginneren und zur seitlichen Begrenzung ist die Raufe 46 mit Seitenblechen 47, 48 verschlossen (Fig. 3).

Die Drahtmatte ist so auf dem Rahmen befestigt, daß sie die von seinen Rahmengliedern 8-11 umschlossene Fläche vollständig überdeckt und dadurch den Käfig nach oben versperrt, sobald der Deckel geschlossen ist. Die Längs- und Querstäbe 45, 46 sind auf den Oberseiten 48-51 der horizontalen Winkelschenkel 17, 18, d. h. den Rahmengliedern 8-11 befestigt und zwar so, daß die Stäbe im Abstand von den Scheiteln der Winkelprofile 17, 18 bzw. den Außenkanten der Rahmenglieder 8-11 angeordnet sind. Aus dieser Anordnung ergibt sich eine umlaufende ebene Unterstützungsfläche 52 für den horizontalen Schenkel 40 des Haubenrandes.

In Querrichtung ist die Filterhaube durch den nach unten weisenden Schenkel der Führungswinkel 19, 20 gegen Verschieben gesichert. In Längsrichtung besteht die Verschiebesicherung der Filterhaube aus den aufgehenden Außenkanten der Querrahmenglieder 8, 9.

Der Käfig ist in der Regel zusammen mit einer Mehrzahl von weiteren Käfigen mit Hilfe von Stütz- und Führungsleisten 53, 54 so in ein Regal eingebaut, daß das Querglied 9 des Deckels von einer Person als Handhabe des Deckels benutzt werden kann. Zum Öffnen des Käfigs, beispielsweise für die Entnahme eines Tieres aus der Wanne 2 wird jedoch zunächst die Filterhaube senkrecht nach oben gehoben, bis ihre Verschiebesicherungen freiwerden. Nach Abnehmen der Filterhaube 6 kann eine Person den Deckel 3 in Längsrichtung zurückschieben, da sich die freien Winkelschenkel der Anschläge 33 der der Innenseite des Wannenrandes abstützen, ohne daß der Deckel selbst seine Führung verliert. Hierbei wird zunächst der Formschluß des Anschlages 33 mit dem rückwärtigen Querglied 8 des Rahmens 7 gelöst. Das Zurückschieben des Deckels erfolgt so weit, daß zwar die Öffnung 5 des Wannenrandes frei wird, wobei die Verschiebung maximal ihr Ende finden kann, wenn die Raufe 47 an der Rückwand 8 der Wanne anschlägt, jedoch wird sie nur so weit getrieben, daß das Tier im Käfig nicht flüchten kann. Mit der anderen Hand kann dann in die Wanne gegriffen werden, um das Versuchstier herauszunehmen. Wenn nötig, kann der Deckel dazu auch an der Handhabe 9 angehoben werden und schwenkt dann in der Längsführung nach oben, ohne in die Wanne abzukippen. Danach kann der Deckel 3 von der gleichen Person mit einer Hand wieder geschlossen werden, bis die von den Blechen 27, 28 gebildeten Anschläge an der Innenseite der Wannenvorderwand 31 anschlagen. Hierbei kommt auch der Formschluß des Anschlages 33 mit dem Wannenrand zustande, so daß eine hinreichende Sicherung des Deckels gegen Abheben gewährleistet ist. Danach läßt sich die Filterhaube 6 von oben über den Deckel stülpen und dabei auf dem Rahmen des Deckels festlegen.

## Patentansprüche

1. Tierkäfig (1) bestehend aus einer Wanne (2) zur Aufnahme eines oder mehrerer Kleintiere, einem Deckel (3), welcher die Wanne (2) nach oben verschließt und von dieser abgehoben werden kann, dadurch gekennzeichnet, daß der Deckel (3) auf der Wanne (2) abgestützt und in einer Dimension (b) der von dem Wannenrand umschlossenen Öffnungsfläche (5) der Wanne (2) und in deren Ebene zwangsgeführt ist, jedoch quer zur Führungsrichtung einseitig aufklappbar ist.

2. Tierkäfig nach Anspruch 1, dadurch gekennzeichnet, daß der bewegliche Teil der Deckelführung aus Profilen (10, 11) besteht, die parallele Rahmenglieder eines umlaufenden horizontalen Rahmen (7) aus winkelsteif zueinander angeordneten Rahmengliedern (8-11), der als Unterstützung einer Filterhaube (6) dient.

3. Tierkäfig nach einem oder mehreren der vorausgehenden Ansprüche, gekennzeichnet durch ein Rahmengeviert (8-11), dessen Führungsglieder (10, 25; 11, 26) als stationären Teil der Führung die Oberseite (15) des Wannenrandes (4) und deren aufgehende Außenkanten (16) benutzen, während an den mit diesen Rahmengliedern (10, 11) winkelsteif verbundenen Rahmengliedern (8, 9) Anschläge (27, 28; 33) zur Begrenzung der Führungslänge und zur Deckelsicherung vorgesehen sind.

4. Tierkäfig nach einem oder mehreren der vorausgehenden Ansprüche, dadurch gekennzeichnet, daß die Wannenränder (4) nach außen und horizontal gerichtete Flansche (13) aufweisen und wenigstens die die bewegliche Führung bildenden Rahmenglieder (10, 11) ein Winkelprofil (19, 20) aufweisen, dessen horizontale Winkelschenkel (17, 18) zur Unterstützung der Filterhaube (20) dienen und ihrerseits auf den ihnen zugeordneten Flanschen (13) des Wannenrandes (4) abgestützt sind.

5. Tierkäfig nach einem oder mehreren der vorausgehenden Ansprüche, dadurch gekennzeichnet, daß der Rahmen (7) aus einem Blechausschnitt (44) besteht, welcher in einer Baueinheit alle Rahmenglieder (8-11) umfaßt.

6. Tierkäfig nach einem oder mehreren der vorausgehenden Ansprüche, dadurch gekennzeichnet, daß der Deckel eine Drahtmatte (47) aufweist, welche die von dem Rahmen (7) umschlossene Fläche überdeckt und mit den Enden der Mehrzahl ihrer Längs- und Querstäbe (45, 46) auf den Oberseiten (48-51) der horizontalen Winkelschenkel (17, 18) des Rahmens (7) befestigt ist, wobei die Stäbe im Abstand von dem Scheitel der Winkelprofile (17, 18) bzw. den Außenkanten der Rahmenglieder (8-11) angeordnet sind, um eine ebene Auflage für die Filterhaube (6) zu bilden.

7. Tierkäfig nach einem oder mehreren der vorausgehenden Ansprüche, dadurch gekennzeichnet, daß einer der Anschläge (27, 28) zur Begrenzung der geführten Länge des Deckels (3) von Winkelprofilen (27, 28) an dem vorderen Rahmenglied (9) gebildet wird, während der Anschlag (33) der Abhebesicherung des Deckels (2) aus einem oder mehreren Längsstabenden besteht.

8. Tierkäfig nach einem oder mehreren der vorausgehenden Ansprüche, dadurch gekennzeichnet, daß die freien Ränder der aufgehenden Wände (34-37) der Filterhaube (6) winkelförmig ausgebildet sind, wobei die freien Schenkel (43) an den Führungswinkeln (19, 20) des Rahmens (77) bzw. die Außenkanten der Querrahmenglieder (8, 9) als Verschiebesicherung der Filterhaube (6) dienen und die daran anschließenden horizontalen Rahmenflächen (42) als Filterhaubenauflage vorgesehen sind.

9. Tierkäfig nach einem oder mehreren der vorausgehenden Ansprüche, dadurch gekennzeichnet, daß die Filterhaube (6) mit dem Rahmen (7) mit Hilfe einer Klemmspanne kraftschlüssig verbunden ist.

10. Tierkäfig nach einem oder mehrerem der vorausgehenden Ansprüche, dadurch gekennzeichnet, daß der Zwangslauf des Deckels (2) in Öffnungrichtung durch seinen Formschluß mit der Wanne (2) begrenzt ist.
